# FASCICULE DE BREVET EUROPEEN

(11) **EP 4 326 565 B1**
(45) Date de publication et mention de la délivrance du brevet: **04.06.2025**
(21) Numéro de dépôt: 22722297.3
(22) Date de dépôt: 11.04.2022
(51) Int. Cl.: B60C 9/18, B60C 9/20, B60C 11/00

(54) **PNEUMATIQUE**
LUFTREIFEN
TYRE

(30) Priorité: 23.04.2021 FR 2104232
(43) Date de publication de la demande: 28.02.2024
(73) Titulaire: COMPAGNIE GENERALE DES ETABLISSEMENTS MICHELIN, 63000 Clermont-Ferrand (FR)
(72) Inventeur: COSTE, Nathalie, 63040 CLERMONT-FERRAND Cedex 9 (FR); DAYET, Patrick, 63040 CLERMONT-FERRAND Cedex 9 (FR); HEBERT, Stéphane, 63040 CLERMONT-FERRAND Cedex 9 (FR)
(74) Mandataire: M.F.P. Michelin
(86) Numéro de dépôt international: PCT/FR2022/050685
(87) Numéro de publication internationale: WO 2022/223903

(56) Documents cités:
- EP-A1- 2 457 743
- DE-A1- 102015 223 929
- FR-A1- 2 774 333
- FR-A1- 3 022 838
- FR-A1- 3 094 276

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Un pneumatique connu est divulgué dans le document DE 102015223929 A.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction tangente à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à » signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis l'axe de rotation du pneumatique est inférieure à, respectivement supérieure à ».

Radialement à l'extérieur de l'armature de sommet, on trouve la bande de roulement habituellement constituée de matériaux élastomériques destinés à venir au contact du sol dans l'aire de contact entre le sol et le pneumatique.

Il est connu de pourvoir la bande de roulement, c'est-à-dire la partie du pneumatique destinée à venir en contact avec le sol lors du roulage et à s'user lors du roulage, d'une sculpture formée d'éléments en relief délimités par des découpures telles que des rainures, qu'elles soient d'orientation circonférentielle, transversale ou oblique. L'objectif d'une telle sculpture est de conférer à la bande de roulement de bonnes performances en roulage sur chaussée sèche et sur chaussée revêtue d'eau notamment par temps de pluie.

Pour améliorer les performances des bandes de roulement sans toutefois trop abaisser les rigidités de cisaillement desdites bandes, il est connu de former sur la surface de roulement une pluralité d'arêtes orientées transversalement ou en oblique afin de couper la pellicule d'eau sur une chaussée pour assurer un bon contact entre la bande de roulement et la chaussée. Un moyen d'obtention de telles arêtes consiste à pourvoir la bande de roulement avec une pluralité de découpures, ces découpures ayant la forme de rainures ou la forme d'incisions. On distingue, dans la présente demande, les incisions des rainures en ce que les incisions ont une largeur appropriée pour permettre pendant le roulage un contact au moins partiel entre les parois en vis-à-vis délimitant ces incisions et notamment au cours du passage dans le contact avec le sol, ce qui ne saurait être le cas pour les rainures dans les conditions normales d'usage du pneu.

Au sens de l'invention, une découpure d'orientation longitudinale est une découpure dont le plan moyen d'au moins une partie des parois de ladite découpure forme un angle avec un plan longitudinal inférieur à 10°. Cet angle formé avec un plan longitudinal peut être orienté dans un sens ou dans l'autre par rapport audit plan longitudinal. Une découpure d'orientation longitudinale peut encore être une découpure dont les parois ondulent ou zigzaguent autour d'un plan moyen tel qu'il vient d'être décrit.

Au sens de l'invention, une découpure d'orientation transversale est une découpure dont le plan moyen d'au moins une partie des parois de ladite découpure forme un angle avec un plan radial inférieur à 35°. Cet angle formé avec un plan radial peut être orienté dans un sens ou dans l'autre par rapport audit plan radial. Une découpure d'orientation transversale peut encore être une découpure dont les parois ondulent ou zigzaguent autour d'un plan moyen tel qu'il vient d'être décrit.

Au sens de l'invention, une découpure d'orientation oblique est une découpure dont le plan moyen d'au moins une partie des parois de ladite découpure forme un angle avec un plan radial compris entre 35° et 80°. Cet angle formé avec un plan radial peut être orienté dans un sens ou dans l'autre par rapport audit plan radial. Une découpure d'orientation oblique peut encore être une découpure dont les parois ondulent ou zigzaguent autour d'un plan moyen tel qu'il vient d'être décrit.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet un accroissement du nombre de kilomètres parcourus, l'usure du pneumatique étant moindre.

Afin d'augmenter encore la durée de vie des pneumatiques, il est usuel de choisir des matériaux polymériques constitutifs de la bande de roulement présentant des propriétés de résistance en usure améliorées.

De tels pneumatiques sont par exemple décrits dans le document US 6,247,512. Ce document décrit la superposition de deux couches de matériaux pour former la bande de roulement, le matériau externe venant au contact du sol étant notamment plus performant en termes d'usure.

Le pneumatique et notamment la zone sommet du pneumatique, située entre les flancs de celui-ci, est ainsi constituée de plusieurs mélanges polymériques renforcés ou non par des éléments de renforcement qu'ils s'agissent des couches formant l'armature de sommet, de l'armature de carcasse, des couches formant la bande de roulent ou bien encore de couches de mélanges au contact des unes ou des autres déjà citées.

Lors des roulages, ces couches de mélanges élastomériques s'échauffent et se déforment du fait de l'usage du pneumatique et peuvent conduire à l'apparition ou bien la propagation de fissures. Ces fissures ont notamment tendance à se propager au niveau de l'interface formée entre deux de ces couches.

Il est notamment connu du document EP 1103 391 A1 de préparer certains semi-finis par coextrusion de plusieurs mélanges élastomériques pour favoriser une meilleure association de deux ou plusieurs couches avant l'assemblage final des différents constituants pour réaliser le pneumatique. S'il s'avère que de telles coextrusions sont favorables à une meilleure cohésion entre les couches, une telle technique a toutefois ses limites, l'ensemble des couches ne pouvant pas être coextrudées, notamment lorsqu'elles ne sont que partiellement en contact l'une avec l'autre, une couche d'éléments de renforcements venant par exemple s'intercaler entre elles.

Il n'est donc pas rare de voir apparaître des fissurations au sein des pneumatiques pouvant conduire à une décohésion entre certaines couches notamment lorsque les pneumatiques sont soumis à des contraintes particulièrement sévères.

Les inventeurs se sont donnés pour mission d'être en mesure de fournir des pneumatiques présentant des performances d'endurance améliorées et plus spécifiquement des propriétés d'endurance améliorées de la zone sommet du pneumatique, notamment lorsque celui-ci est soumis à des contraintes particulièrement sévères, notamment en termes de charges, pression ou température.

Ce but a été atteint selon l'invention par un pneumatique, à armature de carcasse radiale constituée d'au moins une couche d'éléments de renforcement insérés entre deux couches de calandrage, constituées de mélanges élastomériques, ledit pneumatique comprenant une armature de sommet constituée d'au moins une couche d'éléments de renforcement insérés entre des couches de calandrage constituées de mélanges élastomériques, elle-même coiffée radialement d'une bande de roulement réunie à deux bourrelets par l'intermédiaire de deux flancs, ladite bande de roulement comportant des découpures formant au moins un élément de sculpture, ladite bande de roulement comportant au moins une première couche de mélange élastomérique continue axialement formant la surface de roulement du pneumatique, au moins une deuxième couche de mélange élastomérique continue axialement étant radialement intérieure à ladite au moins une première couche, formant la partie radialement la plus intérieure de ladite bande de roulement et au contact d'au moins une couche de calandrage d'au moins une couche d'éléments de renforcement de l'armature de sommet, au moins une troisième couche de mélange élastomérique continue axialement étant au contact d'une couche de calandrage de ladite au moins une couche d'éléments de renforcement de l'armature de carcasse et d'une couche de calandrage de la couche d'éléments de renforcement radialement la plus intérieure de l'armature de sommet, ladite au moins une deuxième couche de mélange élastomérique étant constituée d'au moins une partie centrale et deux parties axialement extérieures, la distance entre lesdites deux parties axialement extérieures de ladite au moins une deuxième couche de mélange élastomérique et tout point de la surface des découpures étant supérieure à 1 mm, ladite au moins une troisième couche de mélange élastomérique étant constituée d'au moins une partie centrale et deux parties axialement extérieures, chacune des parties axialement extérieures de ladite au moins une deuxième couche de mélange élastomérique présentant une surface de contact avec une partie axialement extérieure de ladite au moins une troisième couche de mélange élastomérique, la valeur du module sécant d'élasticité à 10 % d'allongement desdites deux parties axialement extérieures de ladite au moins une deuxième couche de mélange élastomérique étant inférieure ou égale à la valeur du module sécant d'élasticité à 10 % d'allongement de ladite au moins une couche de calandrage d'au moins une couche d'éléments de renforcement de l'armature de sommet, la valeur du module sécant d'élasticité à 10 % d'allongement desdites deux parties axialement extérieures de ladite au moins une troisième couche de mélange élastomérique étant au moins 1.3 fois inférieure à la valeur du module sécant d'élasticité à 10 % d'allongement de ladite couche de calandrage de ladite au moins une couche d'éléments de renforcement de l'armature de carcasse et inférieure ou égale à la valeur du module sécant d'élasticité à 10 % d'allongement d'au moins une couche de calandrage de la couche d'éléments de renforcement radialement la plus intérieure de l'armature de sommet, et la valeur du module sécant d'élasticité à 10 % d'allongement desdites deux parties axialement extérieures de ladite au moins une deuxième couche de mélange élastomérique est égale à la valeur du module sécant d'élasticité à 10 % d'allongement desdites deux parties axialement extérieures de ladite au moins une troisième couche de mélange élastomérique.

En ce qui concerne les compositions de caoutchouc, le module sécant d'élasticité à 10 % d'allongement est le module élastique du mélange mesuré lors d'une expérience de traction uniaxiale, à une valeur d'allongement de 0.1 (soit 10% d'allongement, exprimé en pourcentage). On impose une vitesse constante de traction uniaxiale à l'éprouvette, et on mesure son allongement et l'effort. La mesure est réalisée à l'aide d'une machine de traction de type INSTRON, à une température de 23°C, et une humidité relative de 50% (Norme ISO 23529). Les conditions de mesurage et d'exploitation des résultats pour déterminer l'allongement et la contrainte sont tels que décrits dans la norme NF ISO 37: 2012-03. On détermine la contrainte pour un allongement de 0.1 et on calcule le module sécant d'élasticité à 10 % d'allongement en faisant le rapport de cette valeur de contrainte sur la valeur d'allongement. L'homme du métier saura choisir et adapter les dimensions de l'éprouvette en fonction de la quantité de mélange accessible et disponible en particulier dans le cas de prélèvements d'éprouvette dans un produit fini tel que le pneumatique.

Au sens de l'invention, des valeurs de modules sécants d'élasticité à 10 % d'allongement sont égales lorsque leur rapport est compris entre 0.95 et 1.05 ; ce rapport correspond à la prise en compte des incertitudes liées à la mesure des modules sécants d'élasticité à 10 % d'allongement.

Les différentes mesures sont effectuées sur des pneumatiques neufs, n'ayant encore effectué aucun roulage.

De préférence selon l'invention, la partie centrale de ladite au moins une deuxième couche de mélange élastomérique et la partie centrale de ladite au moins une troisième couche de mélange élastomérique sont centrées sur le plan équatorial.

Ladite au moins une deuxième couche de mélange élastomérique forme avantageusement une partie radialement intérieure de la bande de roulement, radialement au contact de la couche de l'armature de sommet radialement la plus extérieure.

Les inventeurs ont su mettre en évidence que la zone du sommet du pneumatique comportant des parties axialement extérieures de la deuxième couche de mélange élastomérique et des parties axialement extérieures de la troisième couche de mélange élastomérique présentant des valeurs de module sécant d'élasticité à 10 % d'allongement égales et lesdites valeurs de module sécant d'élasticité à 10 % d'allongement étant inférieures aux valeurs de module sécant d'élasticité à 10 % d'allongement des autres mélanges élastomériques d'au moins une partie des couches avec lesquelles elles sont en contact, autorise des roulages plus importants que ceux autorisés par des pneumatiques de conception plus usuelles, sans voir apparaître de séparation entre les différents mélanges notamment lors de roulages dans des conditions particulièrement sévères.

Les inventeurs ont notamment mis en évidence que lorsque le pneumatique est soumis à des contraintes sévères lors de roulage, les phénomènes de fissuration apparaissent essentiellement dans les zones épaules du pneumatique du fait notamment des élévations de température dans ces zones et des fortes déformations auxquelles elles sont soumises durant les roulages.

Les inventeurs pensent que l'association de couches de mélanges semblables notamment en termes de rigidité formant entre elles une interface et dont les valeurs de module sécant d'élasticité à 10 % d'allongement sont inférieures à celles d'au moins une partie des autres mélanges élastomériques environnants permet de réduire l'apparition ou tout au moins la propagation de fissures au niveau de cette interface.

Selon une réalisation préférée de l'invention, la valeur du module sécant d'élasticité à 10 % d'allongement desdites deux parties axialement extérieures de ladite au moins une troisième couche de mélange élastomérique est au moins 1.5 fois inférieure à la valeur du module sécant d'élasticité à 10 % d'allongement de ladite couche de calandrage de ladite au moins une couche d'éléments de renforcement de l'armature de carcasse.

Selon un mode de réalisation préféré de l'invention, les mélanges élastomériques constitutifs desdites deux parties axialement extérieures de ladite au moins une deuxième couche de mélange élastomérique et desdites deux parties axialement extérieures de ladite au moins une troisième couche de mélange élastomérique sont des mélanges élastomériques à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante, et de préférence de même(s) nature(s).

Les inventeurs ont encore mis en évidence que des choix de mélanges élastomériques à base d'élastomères de mêmes natures et notamment à base de caoutchouc naturel ou bien de polyisoprène synthétique, présents à titre majoritaire en cas de coupage, est favorable à une meilleure interpénétration des mélanges au contact l'un de l'autre d'une part à cru et d'autre part après cuisson. En effet, la tenue de l'interface sera d'autant plus résistante que l'interpénétration des mélanges concernées se fait sur une plus grande profondeur. Améliorer la tenue de l'interface dès l'association des mélanges, avant cuisson, permet de prévenir au mieux l'emprisonnement d'air au niveau de l'interface, celle-ci étant encore renforcée lors de la cuisson.

Avantageusement selon l'invention, les mélanges élastomériques constitutifs desdites deux parties axialement extérieures de ladite au moins une deuxième couche de mélange élastomérique et desdites deux parties axialement extérieures de ladite au moins une troisième couche de mélange élastomérique ont la même composition élastomérique, c'est-à-dire le(s) même(s) élastomère(s) dans les mêmes proportions.

Avantageusement selon l'invention, les mélanges élastomériques constitutifs desdites deux parties axialement extérieures de ladite au moins une deuxième couche de mélange élastomérique et desdites deux parties axialement extérieures de ladite au moins une troisième couche de mélange élastomérique sont à base de la même charge renforçante. Un tel choix de charges renforçantes contribue à l'obtention de valeurs de modules sécants d'élasticité à 10 % d'allongement desdites deux parties axialement extérieures de ladite au moins une deuxième couche de mélange élastomérique et desdites deux parties axialement extérieures de ladite au moins une troisième couche de mélange élastomérique égales.

Avantageusement encore, les taux de charge renforçante des mélanges élastomériques constitutifs desdites deux parties axialement extérieures de ladite au moins une deuxième couche de mélange élastomérique et desdites deux parties axialement extérieures de ladite au moins une troisième couche de mélange élastomérique sont sensiblement identiques.

Selon une variante préférée de l'invention, les mélanges élastomériques constitutifs desdites deux parties axialement extérieures de ladite au moins une deuxième couche de mélange élastomérique et les mélanges élastomériques desdites deux parties axialement extérieures de ladite au moins une troisième couche de mélange élastomérique sont identiques.

Selon une variante de réalisation de l'invention, la valeur du module sécant d'élasticité à 10 % d'allongement desdites deux parties axialement extérieures de ladite au moins une deuxième couche de mélange élastomérique est au moins 1.3 fois inférieure, et de préférence au moins 1.5 fois inférieure, à la valeur du module sécant d'élasticité à 10 % d'allongement de ladite au moins une couche de calandrage d'au moins une couche d'éléments de renforcement de l'armature de sommet.

Avantageusement encore et notamment selon cette variante de réalisation de l'invention, la valeur du module sécant d'élasticité à 10 % d'allongement desdites deux parties axialement extérieures de ladite au moins une troisième couche de mélange élastomérique est avantageusement au moins 1.3 fois inférieure, et de préférence au moins 1.5 fois inférieure, à la valeur du module sécant d'élasticité à 10 % d'allongement de ladite au moins une couche de calandrage de la couche d'éléments de renforcement radialement la plus intérieure de l'armature de sommet.

Selon ces variantes de réalisation de l'invention, il apparait un gradient de rigidité des mélanges, les mélanges les moins rigides étant avantageusement localisés axialement le plus à l'extérieur au regard des mélanges avec lesquels ils sont en contact. De tels arrangements des mélanges élastomériques contribuent à la bonne tenue des interfaces entre les différents mélanges durant l'utilisation des pneumatiques en roulage quelles que soient les conditions d'utilisation.

Selon une autre variante de réalisation de l'invention, les couches de calandrage des couches d'éléments de renforcement de l'armature sommet étant constituées d'au moins une partie centrale et deux parties axialement extérieures, la valeur du module sécant d'élasticité à 10 % d'allongement desdites deux parties axialement extérieures desdites couches de calandrage des couches d'éléments de renforcement de l'armature sommet est au moins 1.3 fois inférieure, et de préférence au moins 1.5 fois inférieure, à la valeur du module sécant d'élasticité à 10 % d'allongement de ladite au moins une partie centrale desdites couches de calandrage des couches d'éléments de renforcement de l'armature sommet.

Avantageusement encore selon cette autre variante de réalisation de l'invention, la valeur du module sécant d'élasticité à 10 % d'allongement desdites deux parties axialement extérieures desdites couches de calandrage des couches d'éléments de renforcement de l'armature sommet est égale à la valeur du module sécant d'élasticité à 10 % d'allongement desdites deux parties axialement extérieures de ladite au moins une deuxième couche de mélange élastomérique et à la valeur de module sécant d'élasticité à 10 % d'allongement desdites deux parties axialement extérieures de ladite au moins une troisième couche de mélange élastomérique.

Avantageusement encore selon un mode de réalisation de l'invention, selon l'une quelconque des variantes de réalisation, le pneumatique comportant au moins une quatrième couche de mélange élastomérique séparant au moins les extrémités de deux couches d'éléments de renforcement de l'armature de sommet, la valeur du module sécant d'élasticité à 10 % d'allongement de ladite quatrième couche de mélange élastomérique est inférieure ou égale à la valeur du module sécant d'élasticité à 10 % d'allongement des couches de calandrage desdites deux couches d'éléments de renforcement de l'armature de sommet.

Et de préférence selon ce mode de réalisation de l'invention, la valeur du module sécant d'élasticité à 10 % d'allongement de ladite quatrième couche de mélange élastomérique est égale à la valeur de module sécant d'élasticité à 10 % d'allongement desdites deux parties axialement extérieures de ladite au moins une deuxième couche de mélange élastomérique et à la valeur de module sécant d'élasticité à 10 % d'allongement desdites deux parties axialement extérieures de ladite au moins une troisième couche de mélange élastomérique.

Selon un autre mode de réalisation de l'invention, ladite au moins une deuxième couche de mélange élastomérique est constituée d'un unique mélange polymérique. Selon ce mode de réalisation, les parties axialement extérieures et la partie centrale de ladite au moins une deuxième couche sont constituées d'un même et unique mélange élastomérique.

Selon encore un autre mode de réalisation de l'invention, ladite au moins une troisième couche de mélange élastomérique est constituée d'un unique mélange polymérique. Selon ce mode de réalisation, les parties axialement extérieures et la partie centrale de ladite au moins une troisième couche sont constituées d'un même et unique mélange élastomérique.

Selon l'une quelconque des variantes de réalisation de l'invention ou l'un quelconque des modes de réalisations de l'invention précédemment décrits, l'invention prévoit avantageusement que lors de la préparation des semi-finis constitués de mélanges élastomériques non renforcés en vue de la fabrication d'un pneumatique, plusieurs mélanges sont coextrudés pour favoriser la tenue des interfaces, notamment lorsque ceux-ci présentent des valeurs de module sécant d'élasticité à 10 % d'allongement différentes.

Comme expliqué précédemment, les techniques de coextrusion favorisent la tenue des interfaces entre couches de mélanges élastomériques lors de l'utilisation des pneumatiques.

Selon un mode de réalisation de l'invention, l'armature de sommet du pneumatique est formée d'au moins deux couches de sommet de travail d'éléments de renforcement, de préférence inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

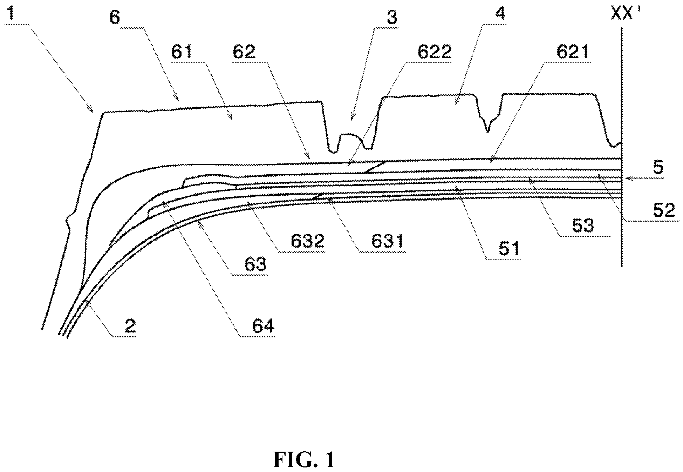

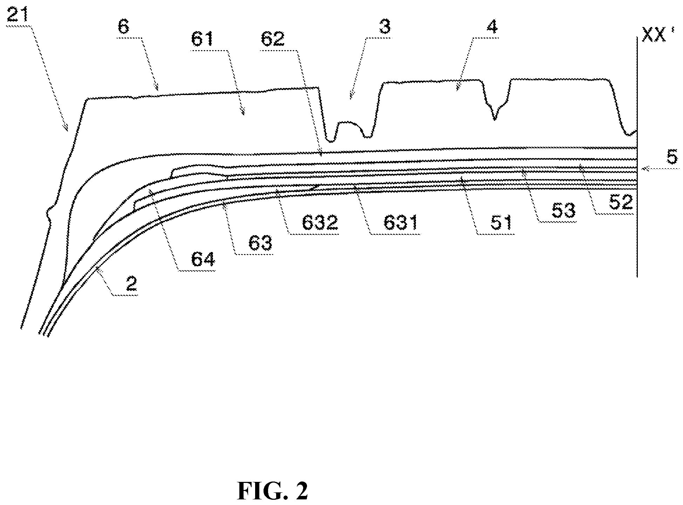

D'autres détails et caractéristiques avantageux de l'invention ressortiront ci-après de la description d'exemples de réalisation de l'invention en référence aux figures1 et 2 qui représentent :
- figure 1, une vue méridienne d'un schéma d'un pneumatique selon un premier mode de réalisation de l'invention,
- figure 2, une vue méridienne d'un schéma d'un pneumatique selon un deuxième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 315/70R22.5, comprend une armature de carcasse radiale 2 ancrée dans deux bourrelets, autour de tringles, non représentées. L'armature de carcasse 2 est formée d'une seule couche de câbles métalliques. L'armature de carcasse 2 est frettée par une armature de sommet 5, elle-même coiffée d'une bande de roulement 6. La bande de roulement comporte cinq rainures 3 formant six ribs 4.

Les zones basses et bourrelets du pneumatique 1 ne sont notamment pas représentés sur les figures.

Sur la figure 1, l'armature de sommet 5 est formée radialement de l'intérieur à l'extérieur :
- d'une première couche de travail 51 formée de câbles métalliques inextensibles, continus sur toute la largeur de la nappe, orientés d'un angle α1,
- d'une couche d'éléments de renforcement circonférentiels 53 formée de câbles métalliques en acier élastiques 21.23, au pas de 2 mm, et
- d'une seconde couche de travail 52 formée de câbles métalliques inextensibles, continus sur toute la largeur de la nappe, orientés d'un angle α2 et croisés aux câbles métalliques de la première couche de travail.

La largeur axiale L₅₁ de la première couche de travail 51 est égale à 246 mm.

La largeur axiale L₅₂ de la deuxième couche de travail 52 est égale à 228 mm.

Quant à la largeur axiale L₅₃ de la couche d'éléments de renforcement circonférentiels 53, elle est égale à 200 mm.

Conformément à l'invention, la bande de roulement 6 est constituée d'une première couche 61, constituée d'un premier mélange élastomérique, radialement extérieure et qui vient au contact du sol lors d'un roulage.

Radialement à l'intérieur de la première couche 61, une deuxième couche 62 est constituée d'une partie centrale 621 et de deux parties axialement extérieures 622. La partie centrale 621 est constituée d'un deuxième mélange élastomérique et les parties axialement extérieures 622 sont constituées d'un troisième mélange.

La largeur axiale de la partie centrale 621 de ladite deuxième couche 62 est égale à 122 mm.

Selon d'autres exemples de réalisation de l'invention, la largeur axiale de la partie centrale 621 de ladite deuxième couche 62 peut varier et être supérieure ou inférieure à cette valeur.

La distance minimum entre les parties 622 de la deuxième couche 62 et les parois de rainures est égale à 2.5 mm.

Radialement à l'intérieur de l'armature sommet, une troisième couche 63 est constituée d'une partie centrale 631 et de deux parties axialement extérieures 632. La partie centrale 631 est constituée d'un quatrième mélange élastomérique et les parties axialement extérieures 632 sont constituées d'un cinquième mélange élastomérique.

La largeur axiale de la partie centrale 631 de ladite troisième couche 63 est égale à 160 mm.

Selon d'autres exemples de réalisation de l'invention, la largeur axiale de la partie centrale 631 de ladite troisième couche 63 peut varier et être supérieure ou inférieure à cette valeur.

Les couches de travail 51 et 52 sont découplées à leurs extrémités par une couche 64 constituée d'un sixième mélange élastomérique.

Les parties axialement extérieures 632 forment une interface avec les parties axialement extérieures 622.

Comme expliqué précédemment, des parties axialement extérieures 622 et 632 des couches 62 et 63 ne peuvent pas être coextrudées lors de la préparation des semi-finis puisque les couches de travail 51 et 52 viennent s'intercaler entre ces parties axialement extérieures 621 et 631.

Il est en revanche possible lors de la préparation des semis-finis de coextruder les couches 61, et les parties centrale 621 et axialement extérieures 622 de la couche 62. La bande de roulement peut encore être constituée de plusieurs couches une couche supplémentaire étant radialement intercalée entre la couche 61 et la couche 62, celle-ci également être coextrudée avec les mélanges précédemment listés.

Il est également possible de coextruder les parties axialement extérieures 632 avec la partie centrale 631 de la couche 63.

La figure 2 illustre un autre exemple de réalisation d'un pneumatique selon l'invention.

Le pneumatique 21 diffère du pneumatique 1 de la figure 1 par une couche 62 constituée d'une seule partie sur toute sa largeur axiale. Elle est constituée du même mélange élastomérique que les parties axialement extérieures 622 de la couche 62 du pneumatique 1 selon la figure 1.

Des pneumatiques ont été réalisés sur la base des différents mélanges élastomériques décrits ci-dessous avec leurs propriétés.

Le module sécant d'élasticité à 10% d'allongement des mélanges est indiqué sous l'appellation MA10 et exprimé en MPa.

| | Mélange A | Mélange B | Mélange C | Mélange D |
|---|---|---|---|---|
| NR (caoutchouc naturel) | 90 | 100 | 100 | 90 |
| IR (polyisoprène synthétique) | 10 | | | 10 |
| Noir N683 | | | | 36 |
| Noir N330 | 35 | 35 | | |
| Noir N326 | | | 47 | |
| Silice 165G | 10 | | | 10 |
| MA10 (MPa) | 4.25 | 3.7 | 5.75 | 3.95 |

Les valeurs des constituants sont exprimées en pce (parties en poids pour cent parties d'élastomères).

Un pneumatique de référence R réalisé selon une configuration correspondant à des réalisations usuelles et correspondant sensiblement aux représentations des figures 1 et 2 et dans lesquelles les couches 62 et 63 sont réalisées en une seule partie sur toutes leurs largeurs axiales. La couche 62 de la bande de roulement est réalisée avec le mélange A. La couche 63 est réalisée avec le mélange B.

Un pneumatique I1 conforme à l'invention telle que représentée sur la figure 1 comporte une partie 621 constituée du mélange A et une partie 631 constituée du mélange B. Les parties 622 et 632 sont constituées du mélange D.

Un pneumatique I2 conforme à l'invention telle que représentée sur la figure 2 comporte une partie 631 constituée du mélange B. La couche 62 et les parties 632 de la couche 63 sont constituées du mélange D.

Un pneumatique I3 conforme à l'invention telle que représentée sur la figure 1 diffère du pneumatique I1 par une partie 621 et une partie 631 constituées du mélange C. Les parties 622 et 632 sont constituées du mélange D.

Dans les pneumatiques R, I1, I2 et I3, la couche 64 est constituée du mélange C.

Un pneumatique I4 conforme à l'invention telle que représentée sur la figure 1 comporte une partie 621 constituée du mélange A et une partie 631 constituée du mélange B. Les parties 622 et 632 ainsi que la couche 64 sont constituées du mélange D.

Dans l'ensemble des pneumatiques, le module sécant d'élasticité à 10% d'allongement des couches de calandrage des couches de travail 51, 52 est égal 5.75 MPa.

Dans l'ensemble des pneumatiques, le module sécant d'élasticité à 10% d'allongement des couches de calandrage de la couche d'armature de carcasse 2 est égal 9.8 MPa.

Dans l'ensemble des pneumatiques, le module sécant d'élasticité à 10% d'allongement de la couche 61 formant la partie de la bande de roulement qui vient au contact du sol est égal 5.7 MPa.

Des essais d'endurance ont été réalisés. Les pneumatiques I1, I2, I3 et I4 conformes à l'invention sont comparés aux pneumatiques de référence R.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4230 Kg progressivement augmentée pour réduire la durée du test.

Les résultats sont présentés dans le tableau suivant. On note en relatif le kilométrage parcouru avant de voir apparaître une fissure en extrémité de la couche de travail 52. Une valeur de 100 étant attribuée au pneumatique R.

| | R | I1 | I2 | I3 | I4 |
|---|---|---|---|---|---|
| Kilométrage | 100 | 130 | 130 | 120 | 140 |

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les résultats sont présentés dans le tableau suivant. On note en relatif le kilométrage parcouru avant de voir apparaître une fissure en extrémité de la couche de travail 52. Une valeur de 100 étant attribuée au pneumatique R.

| | R | I1 | I2 | I3 | I4 |
|---|---|---|---|---|---|
| Kilométrage | 100 | 130 | 120 | 140 | 115 |

## Revendications

1. **-** Pneumatique (1), à armature de carcasse radiale (2) constituée d'au moins une couche d'éléments de renforcement insérés entre deux couches de calandrage, constituées de mélanges élastomériques, ledit pneumatique comprenant une armature de sommet (5) constituée d'au moins une couche d'éléments de renforcement insérés entre deux couches de calandrage constituées de mélanges élastomériques, elle-même coiffée radialement d'une bande de roulement (6) réunie à deux bourrelets par l'intermédiaire de deux flancs, ladite bande de roulement (6) comportant des découpures (3) formant au moins un élément de sculpture (4), ladite bande de roulement comportant au moins une première couche de mélange élastomérique (61) continue axialement formant la surface de roulement du pneumatique, au moins une deuxième couche de mélange élastomérique (62) continue axialement étant radialement intérieure à ladite au moins une première couche (61), formant la partie radialement la plus intérieure de ladite bande de roulement et au contact d'au moins une couche de calandrage d'au moins une couche d'éléments de renforcement (52) de l'armature de sommet (5), au moins une troisième couche de mélange élastomérique (63) continue axialement étant au contact d'une couche de calandrage de ladite au moins une couche d'éléments de renforcement de l'armature de carcasse (2) et d'une couche de calandrage de la couche d'éléments de renforcement (51) radialement la plus intérieure de l'armature de sommet (5), ladite au moins une deuxième couche de mélange élastomérique (62) étant constituée d'au moins une partie centrale (621) et deux parties axialement extérieures (622), **caractérisé en ce que** la distance entre lesdites deux parties axialement extérieures (622) de ladite au moins une deuxième couche de mélange élastomérique (62) et tout point de la surface des découpures (3) est supérieure à 1 mm, **en ce que** ladite au moins une troisième couche de mélange élastomérique (63) est constituée d'au moins une partie centrale (631) et deux parties axialement extérieures (632), **en ce que** chacune des parties axialement extérieures (622) de ladite au moins une deuxième couche de mélange élastomérique (62) présente une surface de contact avec une partie axialement extérieure (632) de ladite au moins une troisième couche de mélange élastomérique (63), **en ce que** la valeur du module sécant d'élasticité à 10 % d'allongement desdites deux parties axialement extérieures (622) de ladite au moins une deuxième couche de mélange élastomérique (62) est inférieure ou égale à la valeur du module sécant d'élasticité à 10 % d'allongement de ladite au moins une couche de calandrage d'au moins une couche d'éléments de renforcement (53) de l'armature de sommet (5), **en ce que** la valeur du module sécant d'élasticité à 10 % d'allongement desdites deux parties axialement extérieures (632) de ladite au moins une troisième couche de mélange élastomérique (63) est au moins 1.3 fois inférieure à la valeur du module sécant d'élasticité à 10 % d'allongement de ladite couche de calandrage de ladite au moins une couche d'éléments de renforcement de l'armature de carcasse (2) et inférieure ou égale à la valeur du module sécant d'élasticité à 10 % d'allongement de ladite couche de calandrage de la couche d'éléments de renforcement (51) radialement la plus intérieure de l'armature de sommet (5), et **en ce que** la valeur du module sécant d'élasticité à 10 % d'allongement lesdites deux parties axialement extérieures (622) de ladite au moins une deuxième couche de mélange élastomérique (62) est égale à la valeur du module sécant d'élasticité à 10 % d'allongement desdites deux parties axialement extérieures (632) de ladite au moins une troisième couche de mélange élastomérique (63).

2. - Pneumatique (1) selon la revendication 1, **caractérisé en ce que** les mélanges élastomériques constitutifs desdites deux parties axialement extérieures (622) de ladite au moins une deuxième couche de mélange élastomérique et desdites deux parties axialement extérieures (632) de ladite au moins une troisième couche de mélange élastomérique sont des mélanges élastomériques à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante, et de préférence de même(s) nature(s).

3. - Pneumatique (1) selon la revendication 2, **caractérisé en ce que** les mélanges élastomériques constitutifs desdites deux parties axialement extérieures (622) de ladite au moins une deuxième couche de mélange élastomérique et desdites deux parties axialement extérieures (632) de ladite au moins une troisième couche de mélange élastomérique sont à base de la même charge renforçante.

4. - Pneumatique (1) selon la revendication 3, **caractérisé en ce que** les taux de charge renforçante des mélanges élastomériques constitutifs desdites deux parties axialement extérieures (622) de ladite au moins une deuxième couche de mélange élastomérique et desdites deux parties axialement extérieures (632) de ladite au moins une troisième couche de mélange élastomérique sont sensiblement identiques.

5. - Pneumatique (1) selon l'une des revendications précédentes, **caractérisé en ce que** les mélanges élastomériques constitutifs desdites deux parties axialement extérieures de ladite au moins une deuxième couche de mélange élastomérique et les mélanges élastomériques desdites deux parties axialement extérieures de ladite au moins une troisième couche de mélange élastomérique sont identiques.

6. - Pneumatique (1) selon l'une des revendications précédentes, **caractérisé en ce que** la valeur du module sécant d'élasticité à 10 % d'allongement desdites deux parties axialement extérieures (622) de ladite au moins une deuxième couche de mélange élastomérique est au moins 1.3 fois inférieure, et de préférence au moins 1.5 fois inférieure, à la valeur du module sécant d'élasticité à 10 % d'allongement de ladite au moins une couche de calandrage d'au moins une couche d'éléments de renforcement (51, 53) de l'armature de sommet.

7. - Pneumatique (1) selon l'une des revendications précédentes, **caractérisé en ce que** la valeur du module sécant d'élasticité à 10 % d'allongement desdites deux parties axialement extérieures (632) de ladite au moins une troisième couche de mélange élastomérique est au moins 1.3, et de préférence au moins 1.5 fois inférieure, fois inférieure à la valeur du module sécant d'élasticité à 10 % d'allongement de ladite couche de calandrage de la couche d'éléments de renforcement radialement la plus intérieure (51) de l'armature de sommet.

8. - Pneumatique (1) selon l'une des revendications 1 à 5, **caractérisé en ce que** les couches de calandrage des couches d'éléments de renforcement (51, 53) de l'armature sommet sont constituées d'au moins une partie centrale et deux parties axialement extérieures et **en ce que** la valeur du module sécant d'élasticité à 10 % d'allongement desdites deux parties axialement extérieures desdites couches de calandrage des couches d'éléments de renforcement de l'armature sommet est au moins 1.3 fois inférieure, et de préférence au moins 1.5 fois inférieure, à la valeur du module sécant d'élasticité à 10 % d'allongement de ladite au moins une partie centrale desdites couches de calandrage des couches d'éléments de renforcement de l'armature sommet.

9. - Pneumatique (1) selon la revendication 8, **caractérisé en ce que** la valeur du module sécant d'élasticité à 10 % d'allongement desdites deux parties axialement extérieures desdites couches de calandrage des couches d'éléments de renforcement de l'armature sommet (51, 53) est égale à la valeur du module sécant d'élasticité à 10 % d'allongement desdites deux parties axialement extérieures (622) de ladite au moins une deuxième couche de mélange élastomérique et à la valeur du module sécant d'élasticité à 10 % d'allongement desdites deux parties axialement extérieures (632) de ladite au moins une troisième couche de mélange élastomérique.

10. - Pneumatique (1) selon l'une des revendications précédentes, le pneumatique comportant au moins une quatrième couche de mélange élastomérique (64) séparant au moins les extrémités de deux couches d'éléments de renforcement (51, 53) de l'armature de sommet, **caractérisé en ce que** la valeur du module sécant d'élasticité à 10 % d'allongement de ladite quatrième couche de mélange élastomérique (64) est inférieure ou égale à la valeur du module sécant d'élasticité à 10 % d'allongement des couches de calandrage desdites deux couches d'éléments de renforcement (51, 53) de l'armature de de sommet.

11. **-** Pneumatique (1) selon la revendication 10, **caractérisé en ce que** la valeur du module sécant d'élasticité à 10 % d'allongement de ladite quatrième couche de mélange élastomérique (64) est égale à la valeur du module sécant d'élasticité à 10 % d'allongement desdites deux parties axialement extérieures (622) de ladite au moins une deuxième couche de mélange élastomérique et à la valeur du module sécant d'élasticité à 10 % d'allongement desdites deux parties axialement extérieures (632) de ladite au moins une troisième couche de mélange élastomérique.

12. - Pneumatique (1) selon l'une des revendications précédentes, **caractérisé en ce que** ladite au moins une deuxième couche de mélange élastomérique (62) est constituée d'un unique mélange polymérique.

13. - Pneumatique (1) selon l'une des revendications précédentes, **caractérisé en ce que** ladite au moins une troisième couche de mélange élastomérique (63) est constituée d'un unique mélange polymérique.

## Patentansprüche

1. Reifen (1) mit einer Radialkarkassenverstärkung (2), die aus mindestens einer Lage aus Festigkeitselementen besteht, welche zwischen zwei Kalandrierlagen eingefügt sind, die aus Elastomermischungen bestehen, wobei der Reifen eine Gürtelverstärkung (5) beinhaltet, die aus mindestens einer Lage aus Festigkeitselementen besteht, welche zwischen zwei Kalandrierlagen eingefügt sind, die aus Elastomermischungen bestehen, die wiederum radial von einem Laufstreifen (6) überdeckt wird, der über zwei Flanken mit zwei Wülsten verbunden ist, wobei der Laufstreifen (6) Ausschnitte (3) umfasst, die mindestens ein Profilelement (4) bilden, wobei der Laufstreifen mindestens eine erste axial durchgehende Lage aus Elastomermischung (61) umfasst, die die Lauffläche des Reifens bildet, wobei mindestens eine zweite axial durchgehende Lage aus Elastomermischung (62) zu der mindestens einen ersten Lage (61) radial innen liegt, den radial innersten Teil des Laufstreifens bildet und mit mindestens einer Kalandrierlage mindestens einer Lage aus Festigkeitselementen (52) der Gürtelverstärkung (5) in Kontakt steht, wobei mindestens eine dritte axial durchgehende Lage aus Elastomermischung (63) mit einer Kalandrierlage der mindestens einen Lage aus Festigkeitselementen der Karkassenverstärkung (2) und mit einer Kalandrierlage der radial innersten Lage aus Festigkeitselementen (51) der Gürtelverstärkung (5) in Kontakt steht, wobei die mindestens eine zweite Lage aus Elastomermischung (62) aus mindestens einem mittleren Teil (621) und zwei axial äußeren Teilen (622) besteht, **dadurch gekennzeichnet, dass** der Abstand zwischen den zwei axial äußeren Teilen (622) der mindestens einen zweiten Lage aus Elastomermischung (62) und jedem Punkt der Oberfläche der Ausschnitte (3) größer als 1 mm ist, dass die mindestens eine dritte Lage aus Elastomermischung (63) aus mindestens einem mittleren Teil (631) und zwei axial äußeren Teilen (632) besteht, dass jeder der axial äußeren Teile (622) der mindestens einen zweiten Lage aus Elastomermischung (62) eine Kontaktfläche mit einem axial äußeren Teil (632) der mindestens einen dritten Lage aus Elastomermischung (63) aufweist, dass der Wert des Elastizitätssekantenmoduls bei 10 % Dehnung der zwei axial äußeren Teile (622) der mindestens einen zweiten Lage aus Elastomermischung (62) kleiner als oder gleich dem Wert des Elastizitätssekantenmoduls bei 10 % Dehnung der mindestens einen Kalandrierlage mindestens einer Lage aus Festigkeitselementen (53) der Gürtelverstärkung (5) ist, dass der Wert des Elastizitätssekantenmoduls bei 10 % Dehnung der zwei axial äußeren Teile (632) der mindestens einen dritten Lage aus Elastomermischung (63) mindestens um das 1,3-fache kleiner als der Wert des Elastizitätssekantenmoduls bei 10 % Dehnung der Kalandrierlage der mindestens einen Lage aus Festigkeitselementen der Karkassenverstärkung (2) und kleiner als oder gleich dem Wert des Elastizitätssekantenmoduls bei 10 % Dehnung der Kalandrierlage der radial innersten Lage aus Festigkeitselementen (51) der Gürtelverstärkung (5) ist und dass der Wert des Elastizitätssekantenmoduls bei 10 % Dehnung der zwei axial äußeren Teile (622) der mindestens einen zweiten Lage aus Elastomermischung (62) gleich dem Wert des Elastizitätssekantenmoduls bei 10 % Dehnung der zwei axial äußeren Teile (632) der mindestens einen dritten Lage aus Elastomermischung (63) ist.

2. Reifen (1) nach Anspruch 1, **dadurch gekennzeichnet, dass** die Elastomermischungen, die die zwei axial äußeren Teile (622) der mindestens einen zweiten Lage aus Elastomermischung und die zwei axial äußeren Teile (632) der mindestens einen dritten Lage aus Elastomermischung bilden, Elastomermischungen auf Basis von Naturkautschuk oder synthetischem Polyisopren mit mehrheitlich cis-1,4-Verkettungen und gegebenenfalls mindestens einem weiteren Dienelastomer sind, wobei der Naturkautschuk oder das synthetische Polyisopren im Fall eines Verschnitts in Bezug auf den Anteil des oder der weiteren verwendeten Dienelastomere und eines verstärkenden Füllstoffs in einem mehrheitlichen Anteil vorhanden sind, und vorzugsweise gleicher Art sind.

3. Reifen (1) nach Anspruch 2, **dadurch gekennzeichnet, dass** die Elastomermischungen, die die zwei axial äußeren Teile (622) der mindestens einen zweiten Lage aus Elastomermischung und die zwei axial äußeren Teile (632) der mindestens einen dritten Lage aus Elastomermischung bilden, auf Basis des gleichen verstärkenden Füllstoffs sind.

4. Reifen (1) nach Anspruch 3, **dadurch gekennzeichnet, dass** die Anteile an verstärkendem Füllstoff der Elastomermischungen, die die zwei axial äußeren Teile (622) der mindestens einen zweiten Lage aus Elastomermischung und die zwei axial äußeren Teile (632) der mindestens einen dritten Lage aus Elastomermischung bilden, im Wesentlichen identisch sind.

5. Reifen (1) nach einem der vorhergehenden Ansprüche, **dadurch gekennzeichnet, dass** die Elastomermischungen, die die zwei axial äußeren Teile der mindestens einen zweiten Lage aus Elastomermischung bilden, und die Elastomermischungen der zwei axial äußeren Teile der mindestens einen dritten Lage aus Elastomermischung identisch sind.

6. Reifen (1) nach einem der vorhergehenden Ansprüche, **dadurch gekennzeichnet, dass** der Wert des Elastizitätssekantenmoduls bei 10 % Dehnung der zwei axial äußeren Teile (622) der mindestens einen zweiten Lage aus Elastomermischung mindestens um das 1,3-fache kleiner, und vorzugsweise mindestens um das 1,5-fache kleiner, als der Wert des Elastizitätssekantenmoduls bei 10 % Dehnung der mindestens einen Kalandrierlage mindestens einer Lage aus Festigkeitselementen (51, 53) der Gürtelverstärkung ist.

7. Reifen (1) nach einem der vorhergehenden Ansprüche, **dadurch gekennzeichnet, dass** der Wert des Elastizitätssekantenmoduls bei 10 % Dehnung der zwei axial äußeren Teile (632) der mindestens einen dritten Lage aus Elastomermischung mindestens um das 1,3-fache kleiner, und vorzugsweise mindestens um das 1,5-fache kleiner, als der Wert des Elastizitätssekantenmoduls bei 10 % Dehnung der Kalandrierlage der radial innersten Lage aus Festigkeitselementen (51) der Gürtelverstärkung ist.

8. Reifen (1) nach einem der Ansprüche 1 bis 5, **dadurch gekennzeichnet, dass** die Kalandrierlagen der Lagen aus Festigkeitselementen (51, 53) der Gürtelverstärkung aus mindestens einem mittleren Teil und zwei axial äußeren Teilen bestehen und dass der Wert des Elastizitätssekantenmoduls bei 10 % Dehnung der zwei axial äußeren Teile der Kalandrierlagen der Lagen aus Festigkeitselementen der Gürtelverstärkung mindestens um das 1,3-fache kleiner, und vorzugsweise mindestens um das 1,5-fache kleiner, als der Wert des Elastizitätssekantenmoduls bei 10 % Dehnung des mindestens einen mittleren Teils der Kalandrierlagen der Lagen aus Festigkeitselementen der Gürtelverstärkung ist.

9. Reifen (1) nach Anspruch 8, **dadurch gekennzeichnet, dass** der Wert des Elastizitätssekantenmoduls bei 10 % Dehnung der zwei axial äußeren Teile der Kalandrierlagen der Lagen aus Festigkeitselementen der Gürtelverstärkung (51, 53) gleich dem Wert des Elastizitätssekantenmoduls bei 10 % Dehnung der zwei axial äußeren Teile (622) der mindestens einen zweiten Lage aus Elastomermischung und dem Wert des Elastizitätssekantenmoduls bei 10 % Dehnung der zwei axial äußeren Teile (632) der mindestens einen dritten Lage aus Elastomermischung ist.

10. Reifen (1) nach einem der vorhergehenden Ansprüche, wobei der Reifen mindestens eine vierte Lage aus Elastomermischung (64) umfasst, die mindestens die Enden von zwei Lagen aus Festigkeitselementen (51, 53) der Gürtelverstärkung trennt, **dadurch gekennzeichnet, dass** der Wert des Elastizitätssekantenmoduls bei 10 % Dehnung der vierten Lage aus Elastomermischung (64) kleiner als oder gleich dem Wert des Elastizitätssekantenmoduls bei 10 % Dehnung der Kalandrierlagen der zwei Lagen aus Festigkeitselementen (51, 53) der Gürtelverstärkung ist.

11. Reifen (1) nach Anspruch 10, **dadurch gekennzeichnet, dass** der Wert des Elastizitätssekantenmoduls bei 10 % Dehnung der vierten Lage aus Elastomermischung (64) gleich dem Wert des Elastizitätssekantenmoduls bei 10 % Dehnung der zwei axial äußeren Teile (622) der mindestens einen zweiten Lage aus Elastomermischung und dem Wert des Elastizitätssekantenmoduls bei 10 % Dehnung der zwei axial äußeren Teile (632) der mindestens einen dritten Lage aus Elastomermischung ist.

12. Reifen (1) nach einem der vorhergehenden Ansprüche, **dadurch gekennzeichnet, dass** die mindestens eine zweite Lage aus Elastomermischung (62) aus einer einzigen Polymermischung besteht.

13. Reifen (1) nach einem der vorhergehenden Ansprüche, **dadurch gekennzeichnet, dass** die mindestens eine dritte Lage aus Elastomermischung (63) aus einer einzigen Polymermischung besteht.

## Claims

1. Tyre (1) with a radial carcass reinforcement (2) made up of at least one layer of reinforcing elements that are inserted between two calendered skim coat layers made of elastomer compounds, said tyre comprising a crown reinforcement (5) which is made up of at least one layer of reinforcing elements that are inserted between two calendered skim coat layers made of elastomer compounds and which itself is capped radially by a tread (6) joined to two beads via two sidewalls, said tread (6) having cuts (3) forming at least one tread pattern element (4), said tread having at least one first axially continuous elastomer-compound layer (61) forming the tread surface of the tyre, at least one second axially continuous elastomer-compound layer (62) being radially on the inside of said at least one first layer (61), forming the radially innermost portion of said tread and in contact with at least one calendered skim coat layer of at least one layer (52) of reinforcing elements of the crown reinforcement (5), at least one third axially continuous elastomer-compound layer (63) being in contact with a calendered skim coat layer of said at least one layer of reinforcing elements of the carcass reinforcement (2) and with a calendered skim coat layer of the radially innermost layer (51) of reinforcing elements of the crown reinforcement (5), said at least one second elastomer-compound layer (62) being made up of at least one central portion (621) and two axially outer portions (622), **characterized in that** the distance between said two axially outer portions (622) of said at least one second elastomer-compound layer (62) and any point of the surface of the cuts (3) is greater than 1 mm, **in that** said at least one third elastomer-compound layer (63) is made up of at least one central portion (631) and two axially outer portions (632), **in that** each of the axially outer portions (622) of said at least one second elastomer-compound layer (62) has a contact surface in contact with an axially outer portion (632) of said at least one third elastomer-compound layer (63), **in that** the value of the secant elastic modulus at 10% elongation of said two axially outer portions (622) of said at least one second elastomer-compound layer (62) is less than or equal to the value of the secant elastic modulus at 10% elongation of said at least one calendered skim coat layer of at least one layer (53) of reinforcing elements of the crown reinforcement (5), **in that** the value of the secant elastic modulus at 10% elongation of said two axially outer portions (632) of said at least one third elastomer-compound layer (63) is at least 1.3 times lower than the value of the secant elastic modulus at 10% elongation of said calendered skim coat layer of said at least one layer of reinforcing elements of the carcass reinforcement (2) and less than or equal to the value of the secant elastic modulus at 10% elongation of said calendered skim coat layer of the radially innermost layer (51) of reinforcing elements of the crown reinforcement (5), and **in that** the value of the secant elastic modulus at 10% elongation of said two axially outer portions (622) of said at least one second elastomer-compound layer (62) is equal to the value of the secant elastic modulus at 10% elongation of said two axially outer portions (632) of said at least one third elastomer-compound layer (63).

2. Tyre (1) according to Claim 1, **characterized in that** the constituent elastomer compounds of said two axially outer portions (622) of said at least one second elastomer-compound layer and of said two axially outer portions (632) of said at least one third elastomer-compound layer are elastomer compounds based on natural rubber or synthetic polyisoprene with a predominance of cis-1,4 chains, and possibly on at least one other diene elastomer, the natural rubber or the synthetic polyisoprene in the case of a blend being present in a predominant proportion relative to the proportion of the other diene elastomer or elastomers used, and on a reinforcing filler, this or these preferably having one and the same nature.

3. Tyre (1) according to Claim 2, **characterized in that** the constituent elastomer compounds of said two axially outer portions (622) of said at least one second elastomer-compound layer and of said two axially outer portions (632) of said at least one third elastomer-compound layer are based on the same reinforcing filler.

4. Tyre (1) according to Claim 3, **characterized in that** the contents of reinforcing filler of the constituent elastomer compounds of said two axially outer portions (622) of said at least one second elastomer-compound layer and of said two axially outer portions (632) of said at least one third elastomer-compound layer are substantially identical.

5. Tyre (1) according to one of the preceding claims, **characterized in that** the constituent elastomer compounds of said two axially outer portions of said at least one second elastomer-compound layer and the elastomer compounds of said two axially outer portions of said at least one third elastomer-compound layer are identical.

6. Tyre (1) according to one of the preceding claims, **characterized in that** the value of the secant elastic modulus at 10% elongation of said two axially outer portions (622) of said at least one second elastomer-compound layer is at least 1.3 times lower, and preferably at least 1.5 times lower, than the value of the secant elastic modulus at 10% elongation of said at least one calendered skim coat layer of at least one layer (51, 53) of reinforcing elements of the crown reinforcement.

7. Tyre (1) according to one of the preceding claims, **characterized in that** the value of the secant elastic modulus at 10% elongation of said two axially outer portions (632) of said at least one third elastomer-compound layer is at least 1.3 times lower, and preferably at least 1.5 times lower, than the value of the secant elastic modulus at 10% elongation of said calendered skim coat layer of the radially innermost layer (51) of reinforcing elements of the crown reinforcement.

8. Tyre (1) according to one of Claims 1 to 5, **characterized in that** the calendered skim coat layers of the layers (51, 53) of reinforcing elements of the crown reinforcement are made up of at least one central portion and two axially outer portions, and **in that** the value of the secant elastic modulus at 10% elongation of said two axially outer portions of said calendered skim coat layers of the layers of reinforcing elements of the crown reinforcement is at least 1.3 times lower, and preferably at least 1.5 times lower, than the value of the secant elastic modulus at 10% elongation of said at least one central portion of said calendered skim coat layers of the layers of reinforcing elements of the crown reinforcement.

9. Tyre (1) according to Claim 8, **characterized in that** the value of the secant elastic modulus at 10% elongation of said two axially outer portions of said calendered skim coat layers of the layers (51, 53) of reinforcing elements of the crown reinforcement is equal to the value of the secant elastic modulus at 10% elongation of said two axially outer portions (622) of said at least one second elastomer-compound layer and to the value of the secant elastic modulus at 10% elongation of said two axially outer portions (632) of said at least one third elastomer-compound layer.

10. Tyre (1) according to one of the preceding claims, the tyre comprising at least one fourth elastomer-compound layer (64) separating at least the ends of two layers (51, 53) of reinforcing elements of the crown reinforcement, **characterized in that** the value of the secant elastic modulus at 10% elongation of said fourth elastomer-compound layer (64) is less than or equal to the value of the secant elastic modulus at 10% elongation of the calendered skim coat layers of said two layers (51, 53) of reinforcing elements of the crown reinforcement.

11. Tyre (1) according to Claim 10, **characterized in that** the value of the secant elastic modulus at 10% elongation of said fourth elastomer-compound layer (64) is equal to the value of the secant elastic modulus at 10% elongation of said two axially outer portions (622) of said at least one second elastomer-compound layer and to the value of the secant elastic modulus at 10% elongation of said two axially outer portions (632) of said at least one third elastomer-compound layer.

12. Tyre (1) according to one of the preceding claims, **characterized in that** said at least one second elastomer-compound layer (62) is made of a single polymer compound.

13. Tyre (1) according to one of the preceding claims, **characterized in that** said at least one third elastomer-compound layer (63) is made of a single polymer compound.
